# EUROPÄISCHE PATENTSCHRIFT

(11) **EP 1 127 907 B1**
(45) Veröffentlichungstag und Bekanntmachung des Hinweises auf die Patenterteilung: **05.11.2008**
(21) Anmeldenummer: 01102533.5
(22) Anmeldetag: 06.02.2001
(51) Int. Cl.: C08G 18/40, C08G 18/62, C09J 175/04

(54) **Thermisch vernetzte Acrylat-Hotmelts**
Thermally crosslinked acrylate hotmelts
Colle thermofusible d'acrylate thermoréticulable

(30) Priorität: 25.02.2000 DE 10008841
(43) Veröffentlichungstag der Anmeldung: 29.08.2001
(73) Patentinhaber: tesa AG, 20253 Hamburg (DE)
(72) Erfinder: Husemann, Marc, Dr., 22605 Hamburg (DE); Zöllner, Stephan, 21244 Buchholz/Nordheide (DE)

(56) Entgegenhaltungen:
- WO-A-00/04079
- US-A- 3 542 741
- US-A- 4 122 248
- US-A- 5 633 317

## Beschreibung

Die Erfindung betrifft durch thermische Behandlung vernetzte Polyacrylate, ein Verfahren zu deren Herstellung sowie deren Anwendung.

Der technologische Prozeß zur Herstellung von Haftklebemassen entwickelt sich immer weiter. In der Industrie sind Heißschmelzverfahren (Hotmeltverfahren) mit lösungsmittelfreier Beschichtungstechnik zur Herstellung von Haftklebemassen von anwachsender Bedeutung. Diese Entwicklung wird durch immer größer werdende Umweltauflagen und steigende Preise für Lösemittel weiter forciert. Daher möchte man Lösungsmittel so weit wie möglich aus dem Fertigungsprozeß für Haftklebebänder eliminieren. Die Einführung der Hotmelt-Technologie stellt wachsende Anforderungen an die Klebemassen. Insbesondere Acrylathaftklebemassen werden sehr intensiv auf Verbesserungen hin untersucht. Für hochwertige industrielle Anwendungen werden Polyacrylate bevorzugt, da diese transparent und witterungsstabil sind. Neben diesen Vorteilen müssen die Acrylathaftklebemassen aber auch hohen Anforderungen im Bereich der Scherfestigkeit gerecht werden. Dies wird durch Polyacrylate mit hohem Molekulargewicht, hoher Polarität und anschließender effizienter Vernetzung erreicht. Eine effiziente Vernetzung wird im einfachsten Fall durch Metall-Chelate erreicht, die bei höheren Temperaturen mit Carbonsäurefunktionen reagieren und somit die Acrylathaftklebemasse vernetzen. Diese Methode ist Stand der Technik für lösungsmittel-haltige Haftklebemassen.

Alternativ können auch multifunktionelle Isocyanate eingesetzt werden. Für Hotmelt-Prozesse sind diese Methoden aber ungeeignet, da die Haftklebemassen bei hohen Temperaturen verarbeitet werden und daher bereits im Verarbeitungsprozeß vernetzen und somit vergelen würden. Nach der Vernetzung sind diese Haftklebemassen nicht mehr beschichtbar.

Für Hotmeltprozesse ist die Elektronenstrahlhärtung (ES-Härtung oder ESH) bevorzugt, da hiermit auch größere Schichtdicken vernetzt werden können. Für die Elektronenstrahlhärtung wird keine thermische Energie benötigt, und die Vernetzung verläuft in relativ kurzer Zeit.

Die ersten ES-härtenden Polyacrylat-Hotmelts wurden in der DE 21 31 059 A1 beschrieben. Weitere ES-härtende Hotmelts wurden in der JP 05017726 entwickelt. In der US 5,994,455 wurde der Zusatz von N-tert.-Butylacrylamid als Monomer beschrieben, um die ES-Härtung zu forcieren.

Die US 3,542,741 beschreibt in ihrem Beispiel 6 ein Polyacrylatcopolymer, erhältlich durch thermische Vernetzung bei 150 °C, enthaltend (a) 92,3 % eines Polyacrylatcopolymers aus (a1) 88,9 Gew-% (160 Gew.-Teile) tert.-Butylacrylat, einem Acrylester mit einem C₄-Alkylrest, und (a3) 11,1 Gew-% (20 Gew.-Teile) tert.-Butylacrylat, (b) 6,1 Gew-% AIBN, einem Photoinitiator, und (c) 1,5 Gew.-% Hexamethylendiisocyanat. Weder tert.-Butoxycarbonylgruppen noch andere Schutzgruppen werden erwähnt.

Die US 5,633,317 ist auf nach dem Hotmeltverfahren herstellbare Haftklebemassen gerichtet, die sich durch eine verbesserte Hitzebeständigkeit auszeichnen. In Beispiel 28 wird eine Haftklebemasse offenbart, die folgende Bestandteile enthält: (a) 87 Gew.-% (100 Gew.-Teile) eines Polyacrylatcopolymers aus (a1) 69 Gew.-% Ethylmethacrylat, (a2) Hydroxyethylacrylat, einem olefinisch ungesättigten Monomer mit funktionellen Gruppen, in einer Menge von weniger als 4,3 Gew-% (5 Gew.-Teile) und (a3) 17,1 Gew-% (20 Gew.-Teile) Benzoylperoxid, einem Photoinitiator, sowie (c) Diphenylmethandiisocyanat, in einer Menge von weniger als 4,3 Gew.-%. Auch diese Schrift gibt keine Hinweise auf die Verwendung von Schutzgruppen.

Die Schriften US 4,122,248 und WO 00/04079 zeigen die Verwendung von tert.-Butylacrylat in Klebemassen auf, jedoch nicht die Verwendung von tert.-Butoxycarbonylgruppen als Schutzgruppen in Klebemassen.

Ein allgemeiner Nachteil der ESH ist die Trägerschädigung. Neben der Klebemasse wird auch das Trägermaterial oder das Trennpapier von den Elektronenstrahlen durchdrungen. Dadurch kommt es zu Schädigungen, die sich in Verfärbungen oder in hohen Abrollkräften für das Klebeband bemerkbar machen. Daher besteht der Bedarf für eine den Träger schonende, aber auch effiziente Vemetzungsmethode für Schmelzhaftkleber.

Aufgabe der Erfindung ist es daher, eine Polymermischung anzubieten, die eine entsprechende schonende Vernetzung ermöglicht, wobei der Vernetzungsprozeß bei Anwendung der lösungsmittelfreien Produktionstechnik jedoch nicht schon während des frühen Verarbeitungsstadiums eintritt. Dabei sollen der Träger nicht geschädigt und dessen Verwendung für ein Klebeband nicht eingeschränkt werden.

Gelöst wird diese Aufgabe durch eine Polymermischung, wie sie im Hauptanspruch beschrieben ist. Die Unter- und Nebenansprüche betreffen eine vorteilhafte Weiterbildung der Polymermischung, Verfahren zur Herstellung von Polyacrylaten auf Basis dieser Polymermischung sowie die Verwendung der Polymermischung als Haftklebemasse.

Die Erfindung ist hervorragend geeignet, die dargestellten Aufgaben zu erfüllen, indem eine solche schonende Vernetzung bei der dargestellten Polymermischung zur Herstellung von vernetzten Polyacrylaten durchführbar ist. Die Erfindung betrifft demgemäß eine Polymermischung aus den folgenden Komponenten:
a) Einem Polyacrylatcopolymer aus den folgenden Monomeren
   a1) Acrylsäureester und/oder Methacrylsäureester der folgenden Formel

      CH₂ = C(R¹)(COOR²),

      wobei R² = H oder CH₃ und R² eine Alkylkette mit 1 - 20 C-Atomen ist,
      zu 65 - 99 Gew.-%, bezogen auf a),
   a2) olefinisch ungesättigte Monomere mit funktionellen Gruppen,
      zu 0 - 15 Gew.-%, bezogen auf a),
   a3) Acrylate und/oder Methacrylate, deren Alkoholkomponente tert.-Butoxycarbonyl-(BOC-) Gruppen enthält,
      zu 1 - 20 Gew.-%, bezogen auf a),
      zu 85 - 99,8 Gew.-%, bezogen auf die Polymermischung,
b) einem die Polymerisation regelnden Photoinitiator
   zu 0,1 - 10 Gew.-%, insbesondere zu 0,5 - 1 Gew.-%, bezogen auf die Polymer mischung,
c) bifunktionellem Isocyanat und/oder bifunktionellem Epoxid
   zu 0,1 - 5 Gew.-%, insbesondere zu 0,5 - 1 Gew.-%, bezogen auf die Polymermischung.

Weiterhin betrifft die Erfindung ein Verfahren zur Herstellung von vernetzten Polyacrylaten, bei welchem die zu vernetzenden Polymere, also Polyacrylatcopolymere entsprechend der vorstehenden Komponente a), bei der das Monomer (a3) Hydroxygruppen enthält, zunächst durch Einführung von tert.-Butoxycarbonylgruppen geschützt werden und die Vernetzung erst nach der Entschützung durch thermische Behandlung der nunmehr entschützten Polyacrylate stattfindet.

Die Einführung der Schutzgruppen dient dabei der Vermeidung der erst im nachhinein angestrebten Vernetzungsreaktion, wenn während früher Verarbeitungsstadien bereits hohe Prozeßtemperaturen vorliegen, wie es beispielsweise im Hotmelt-Prozeß der Fall ist. Der Schutz gilt insbesondere der Vernetzungsreaktion zu diesem Zeitpunkt, aber auch allen sonstigen Konkurrenzreaktionen, die an den ungeschützten funktionellen Gruppen des zu verarbeitenden Polymers, insbesondere an dessen Hydroxidgruppen, angreifen würden.
Konkurrenzreaktionen in diesem Sinne sind sowohl durch thermische Energie initiierte und/oder geförderte Reaktionen als auch alle Reaktionen, die durch andere Energieformen initiiert und/oder gefördert werden und die sich durch Einführung der Schutzgruppe vermeiden lassen.

Besonders vorteilhaft geht man vor, indem man vor der Vernetzungsreaktion zusätzliche Vernetzersubstanzen zu der zu vernetzenden Polymermischung zugibt. Geeignete Vemetzersubstanzen in diesem Sinne sind bi- oder multifunktionelle Isocyanate oder bi- oder multifunktionelle Epoxide. Verwendet werden können hier aber auch alle weiteren, dem Fachmann geläufigen bi- oder multifunktionellen Verbindungen, die in der Lage sind, Polyacrylate zu vernetzen.

Gegenstand der Erfindung ist zudem die Verwendung des Polyacrylates als Haftklebemasse, insbesondere die Verwendung als Haftklebemasse für ein Klebeband, wobei die Acrylathaftklebemasse als ein- oder doppelseitiger Film auf einer Trägerfolie vorliegt.

Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Gewebe und Gewebefolien sowie gegebenenfalls Trennpapier verwenden. Diese Aufzählung soll nicht abschließend sein.

Das allgemeine Reaktionsprinzip für die durch Einführung von BOC-Schutzgruppen gesteuerte Vernetzungsreaktion ist im folgenden dargestellt:
Die Vernetzung der Polymermischung erfolgt durch zwei hintereinander ablaufende Reaktionen. Im ersten Schritt wird ein BOC-funktionalisiertes Polymer hergestellt. Ein relativ einfacher möglicher Weg hierfür ist durch eine polymeranaloge Reaktion gegeben, also durch eine Reaktion an den Makromolekülen, die die chemische Zusammensetzung modifiziert, nicht jedoch den Polymerisationsgrad signifikant verändert. In diesem Stadium ablaufende, durch den Produktionsablauf bedingte Reaktionen greifen die geschützten Hydroxidgruppen nicht an.

Das nun BOC-Gruppen enthaltende Polymer wird dann durch eine säurekatalysierte Reaktion wieder entschützt, wobei die BOC-Gruppen zur freien Hydroxygruppe umgesetzt werden:

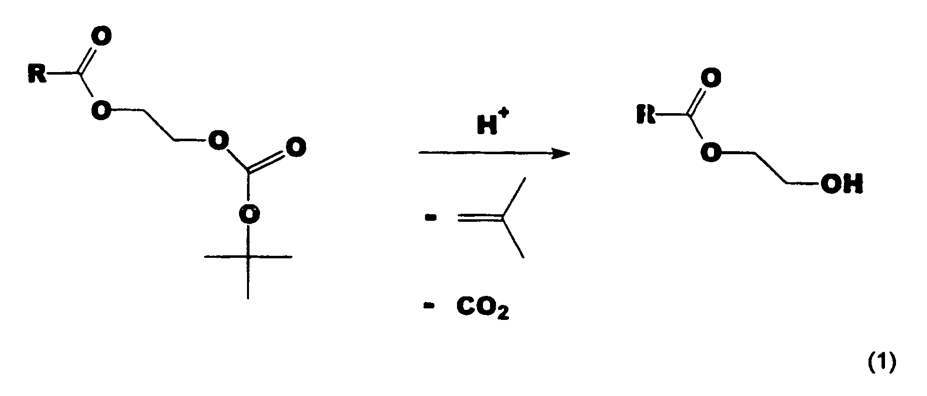

Diese Reaktion wird auch in der Photoresist-Technik (Photoresists: lichtempfindliche, filmbildende Materialien (Photolacke), deren Löslichkeitsverhalten sich durch Belichtung oder Bestrahlung ändert; bei negativ arbeitenden Photoresists geschieht dies durch Vernetzung oder Photopolymerisation) zur Herstellung von Chipstrukturen eingesetzt. Die für diesen Prozess erforderliche Säure wird durch die UV-Bestrahlung eines beigemischten Photokationeninitiators hergestellt.

Im zweiten Schritt werden die Hydroxyfunktionen zur Umsetzung mit einem Vernetzer genutzt. Generell kann man zwischen zwei Reaktionen unterscheiden:
a) Reaktion mit Isocyanaten als Vernetzer
b) Reaktion mit Epoxiden als Vernetzer

Die Reaktion mit Isocyanaten verläuft ohne Säureeinfluß bei erhöhten Temperaturen.

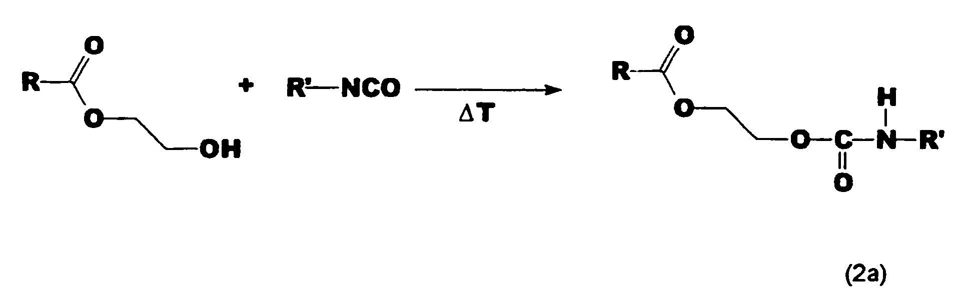

Dagegen verläuft die Reaktion mit den Epoxiden nur unter Säurekatalyse. Auch hier ist die Zufuhr thermischer Energie notwendig.

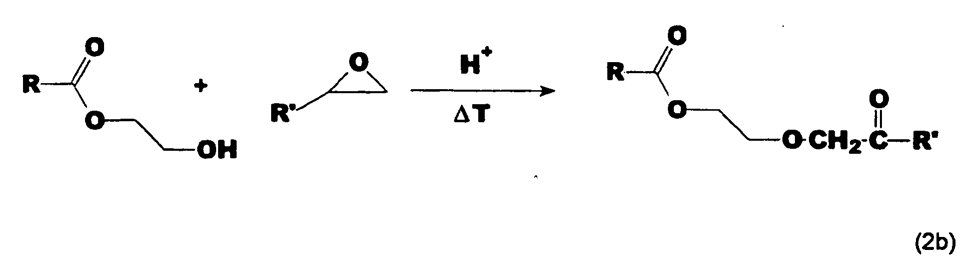

Überträgt man nun diese Reaktionsfolgen auf Haftklebemassen, so müssen zumindest die Basispolymere BOC-Funktionen enthalten. Hydroxy-Gruppen enthaltende Polymere, welche beispielsweise konventionell über eine freie radikalische Polymerisation hergestellt werden können, werden dann in einer polymeranalogen Reaktion mit BOC-Anhydrid umgesetzt, wodurch man die BOC-geschützten Polymere erhält. Sowohl die Basispolymere als auch die mit den BOC-Gruppen versehenen Polymere zeichnen sich durch eine niedrige Viskosität aus. Die Fließviskosität der unvernetzten BOC-haltigen Hafltklebemassen ist relativ niedrig, da kaum polare Comonomere enthalten sind, die ausgeprägte Wasserstoff-Brückenbindungen ausbilden könnten. In diesem Stadium weist die Polymermasse daher eine sehr gute Verarbeitbarkeit im Hotmelt-Prozeß auf.

Nach der Verarbeitung und der Zugabe von UV-Kationeninitiatoren sowie Diisocyanaten oder Diepoxiden bzw. multifunktionellen Isocyanaten oder multifunktionellen Epoxiden als Vernetzerreagentien wird die Komponentenmischung anschließend als Schmelzhaftkleber z.B. über eine Beschichtungsdüse auf einen Träger (beispielsweise Polyester, PVC, Vlies, BOPP) oder auf Trennpapier in Form einer dünnen Schicht aufgetragen und mit UV-Licht (beispielsweise Hg-Niederdrucklampe oder Emissionstrahler) bestrahlt. Hierbei findet die Reaktion (1) statt, aufgrund des Photokationenerzeugers wird eine Säure gebildet, die mit der BOC-Gruppe zur freien Hydroxyfunktion reagiert. Diese Reaktion verläuft bei Temperaturen >100 °C. Als Optimum wird ein Bereich zwischen 120 und 140 °C bevorzugt. Mit der thermischen Freisetzung der Hydroxyreaktion stehen nun für die multifunktionellen Vernetzer reaktive Gruppen zur Verfügung, so daß die Reaktionen (2a) bzw. (2b) ablaufen: Die Isocyanate reagieren bei diesen Temperaturen direkt mit den entstehenden Hydroxyfunktionen und vernetzen die Haftklebemasse auf dem Träger. Die für die Vernetzung mit den multifunktionellen Epoxiden benötigten Protonen sind durch die durch den Photokationeninitiator erzeugte Säure vorhanden. Daher verläuft auch die Vernetzung mit den multifunktionellen Epoxiden in situ.

Durch die Vernetzung mit Isocyanaten bilden sich Amidgruppen aus, die die Polymerketten verknüpfen. Durch die Verknüpfung erhöht sich die Kohäsion der Klebemasse und damit auch die Scherfestigkeit. Entsprechendes gilt bei der Vernetzung über Epoxide für die gebildeten Ethergruppen.

Die physikalischen Eigenschaften des Endproduktes, insbesondere dessen Viskosität, Klebkraft und Anfaßklebrigkeit, können durch den Grad der Vernetzung beeinflußt werden, so daß sich durch geeignete Wahl der Reaktionsbedingungen das Endprodukt optimieren läßt. Durch eine selektive Bestrahlung der Acrylathaftklebemasse, also Bestrahlung nur in ausgewählten Bereichen, bzw. durch die lokale Variation der Bestrahlungsintensität ist es möglich, die BOC-Schutzgruppen nur an ausgewählten Stellen der Haftklebemasse zu entfernen. Dementsprechend stehen für die spätere Vernetzungsreaktion, für die die Anwesenheit polarer Gruppen Voraussetzung ist, nur die zuvor der UV-Strahlung ausgesetzten Bereiche zur Verfügung. Daher lassen sich im Vernetzungsschritt hochvernetzte neben nicht oder gering vernetzten Segmenten erzeugen. Die Selektion von Bereichen, die hoher Strahlungsintensität ausgesetzt sind, neben solchen, in die nicht oder wenig intensiv eingestrahlt wird, kann dabei durch Bestrahlung durch eine Maske geschehen, hierfür dienen insbesondere ein Gitter oder eine Lochmaske, die für die Strahlung nur lokal durchgängig ist, oder alternativ eine geprägte Folie, die eine inhomogene Dicke und/oder Dichte und daher Zonen unterschiedlicher Durchlässigkeit für ultraviolette Strahlung aufweist.

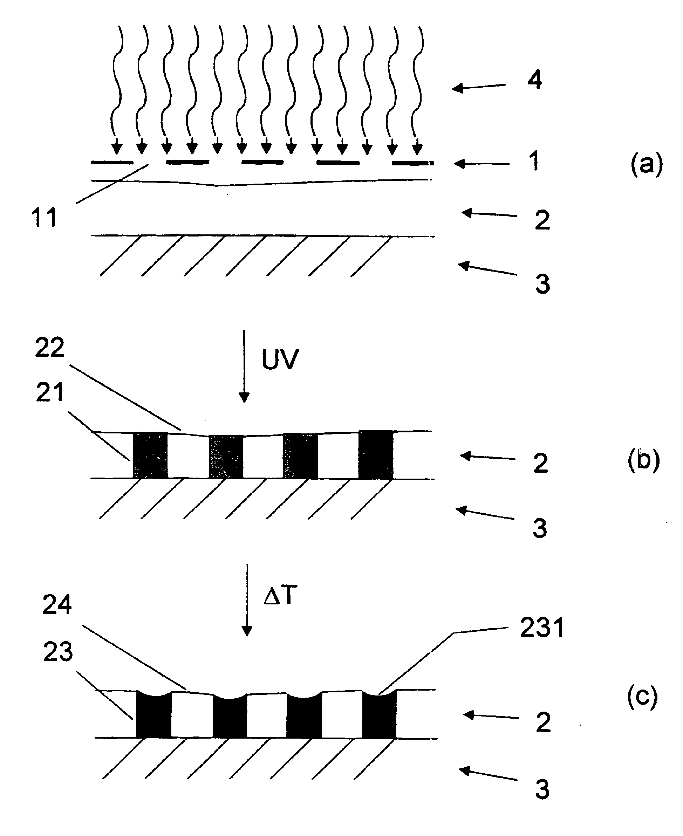

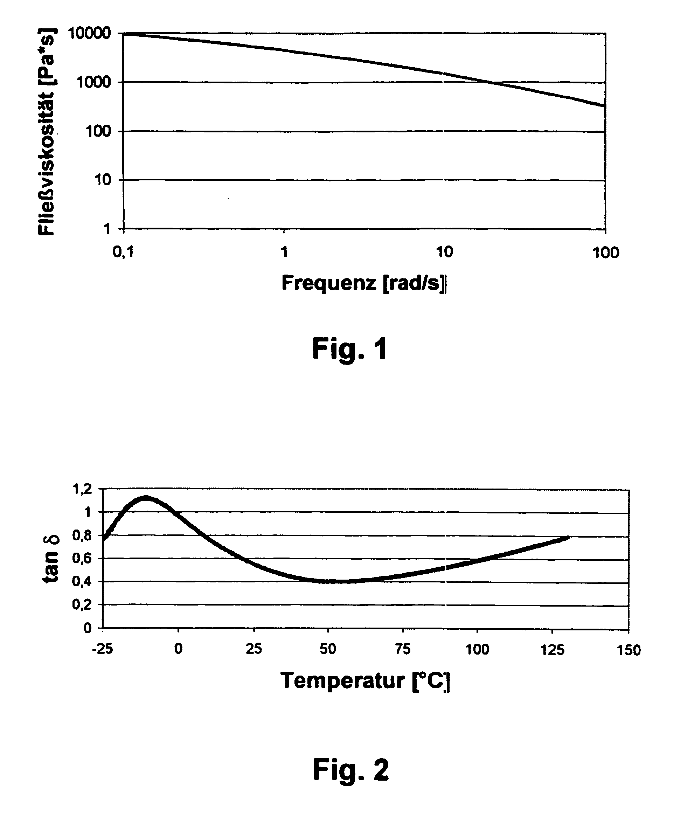

In der Figur 1 wird die Bestrahlung der Acrylatmasse (2) durch eine Lochmaske (1) dargestellt, wobei sich die Acrylatmasse (2) auf dem Träger (3) befindet (a). Die zunächst polaren Gruppen der Acrylatmasse (1) sind gemäß dem Hauptanspruch durch Einführung von BOC-Schutzgruppen in unpolare Gruppen überführt worden; durch UV-Licht (4) und bei hohen Temperaturen (>80 °C) werden diese wieder in polare Acrylsäuregruppen überführt. Die ultravioletten Strahlen (4) können die Maske (1) nur im Bereich der Löcher (11) durchdringen, so daß sich nach der Bestrahlung die im Teil (b) der Abbildung dargestellte Situation ergibt:

Polare Gruppen finden sich nur in bestimmten Bereichen (21) der Acrylatmasse (2), neben diesen liegen weitere Bereiche (22) vor, in denen weiterhin nur unpolare, durch BOC-Gruppen geschützte Funktionen vorliegen.

Wird die Acrylathaftklebemasse nun erhitzt, so kommt es nur in den polaren Bereichen (23) durch Wasserstoffwechselwirkungen zwischen den polaren Gruppen zu einer Vemetzungsreaktion, so daß diese Bereiche (23) sich durch eine hohe Härte auszeichnen, während die unpolaren Bereiche (24) eine niedrigere Viskosität besitzen (c).

Ein weiterer Effekt ist das Freisetzen von Isobuten-Gas und Kohlendioxid an den venetzenden Stellen. Durch diese Reaktion verringert sich das Molekulargewicht der vernetzten Bereiche (23) der Haftklebemasse (2) und man beobachtet eine Volumenkontraktion (231). Die Schichtdicke der Acrylathaftklebemasse (2) wird an den bestrahlten Stellen (23) geringer; dadurch verändern sich die Oberflächentopograhie der Haftklebemasse (2) und somit auch die klebetechnischen Eigenschaften. Die kontrahierten Bereiche (231) weisen eine mit Saugnäpfen vergleichbare Eigenschaft auf, so daß die Klebkraft der Acrylathaftklebemasse (2) aufgrund dieses "Saugnapf"-Effektes verbessert wird.

Die weichen Segmente (24) bewirken ein leichteres Auffließen der Klebemasse auf dem Substrat und erhöhen somit ebenfalls die Klebkraft und die Haftklebrigkeit (Tack). Einen großen Einfluß auf die klebtechnischen Eigenschaften hat der prozentuale Anteil der bestrahlten Fläche sowie die Größe der erzeugten Segmente.

### Beispiele

Die folgenden beispielhaften Experimente sollen die Erfindung näher erläutern, ohne daß durch die Wahl der angegebenen Beispiele die Erfindung unnötig eingeschränkt werden soll.

### Testmethoden:

### Zur Untersuchung der Proben dienten die folgenden Testmethoden:

### Scherfestigkeit (Test A)

Ein 13 mm breiter Streifen des Klebebandes wurde auf eine glatte Stahloberfläche, die dreimal mit Aceton und einmal mit Isopropanol gereinigt wurde, aufgebracht. Die Auftragsfläche betrug 20 mm × 13 mm (Länge × Breite). Anschließend wurde mit konstantem Anpreßdruck das Klebeband viermal auf den Stahlträger gedrückt. Bei 70°C wurde ein 0,5 kg Gewicht an dem Klebeband befestigt, bei Raumtemperatur ein 1 kg Gewicht und jeweils die Zeit bis zum Abfallen des Gewichtes gemessen.
Die gemessenen Scherstandzeiten sind in Minuten angegeben und entsprechen dem Mittelwert aus drei Messungen.

### Dynamisch-Mechanische Analyse, DMA (Test B)

Die Messungen wurden mit dem Gerät Dynamic Stress Rheometer von Rheometrics durchgeführt. Bei 25 °C wurde der mechanische Verlustfaktor tan δ in Abhängigkeit der Frequenz in einem Intervall von 0,1 bis 100 rad/s verfolgt. Die Temperaturabhängigkeit des Verlust faktors wurde bei 10 rad/s in einem Temperaturbereich von -25 °C bis 130 °C gemessen. Alle Experimente wurden mit paralleler Plattenanordnung durchgeführt.

### Probenpräparation

Im folgenden wird die Präparation der Ausgangspolymere beschrieben.

Die untersuchten Polymere wurden konventionell über eine freie radikalische Polymerisation hergestellt; das mittlere Molekulargewicht lag bei etwa 800.000 g/mol. Hydroxy-Gruppen enthaltende Polymere wurden in einer polymeranalogen Reaktion mit BOC-Anhydrid umgesetzt. Als zweite Komponente wurde zu 0,1 - 15 Gewichtsanteilen ein UV-Kationenerzeuger beigemischt. Als dritte Komponente werden zu 0,1 bis 5 Gewichtsanteilen die multifunktionellen (mindestens zwei Isocyanat- oder Epoxid-Funktionen enthaltenden) Isocyanate oder Epoxide hinzugegeben. Diese Komponentenmischung wird anschließend als Schmelzhaftkleber z.B. über eine Beschichtungsdüse auf einen Träger (beispielsweise Polyester, PVC, Vlies, BOPP) oder Trennpapier in Form einer Schicht aufgetragen und mit UV-Licht (beispielsweise Hg-Niederdrucklampe oder Emissionstrahler) bestrahlt.

### Einführung der Schutzfunktion

Für die Einführung der BOC-Gruppen in die Basispolymere wurden die folgenden Monomere konventionell durch radikalische Polymerisation in das Polymer eingebaut:

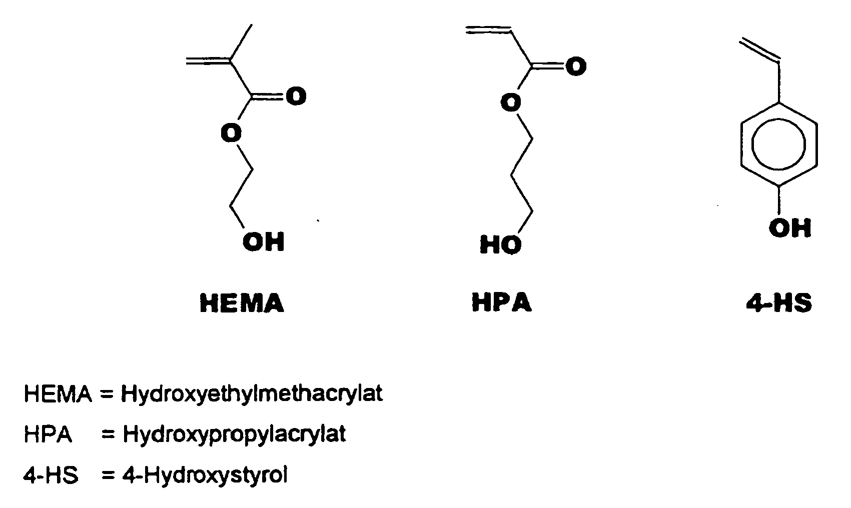

### Beispiel 1

Ein für radikalische Polymerisationen konventioneller 2 L-Glasreaktor wurde mit 40 g HEMA, 40 g Methylacrylat, 320 g 2-Ethylhexylacrylat, und 300 g Aceton/Isopropanol (97:3) befüllt. Nach 45minütiger Durchleitung von Stickstoffgas unter Rühren wurde der Reaktor auf 58 °C hochgeheizt und 0,4 g AlBN [2,2'-Azobis(2-methylbutyronitril)] hinzugegeben. Anschließend wurde das äußere Heizbad auf 75 °C erwärmt und die Reaktion konstant bei dieser Außentemperatur durchgeführt. Nach 4 und 6 h wurde mit jeweils 150 g Aceton/Isopropanol Gemisch verdünnt. Nach 48 h Reaktionszeit wurde die Polymerisation abgebrochen und auf Raumtemperatur abgekühlt.

### Beispiel 2

Es wurde analog Beispiel 1 vorgegangen. Zur Polymerisation wurden 40 g HPA, 80 g Methylacrylat und 280 g 2-Ethylhexylacrylat eingesetzt. Die Lösungsmittelmengen wurden beibehalten.

### Beispiel 3

Es wurde analog Beispiel 1 vorgegangen. Zur Polymerisation wurden 40 g 4-Hydroxystyrol, 300 g 2-Ethylhexylacrylat und 60 g Methylacrylat eingesetzt Die Lösungsmittelmengen wurden beibehalten.

Die resultierenden Polymere sind in Tabelle 1 zusammengefaßt.

| Tabelle 1 | | | | | |
|---|---|---|---|---|---|
| Beispiel | HEMA[%] | 2-EHA [%] | HPA [%] | MA [%] | 4-HS [%] |
| 1 | 10 | 80 | 0 | 10 | 0 |
| 2 | 0 | 70 | 10 | 20 | 0 |
| 3 | 0 | 75 | 0 | 15 | 10 |

| | | | | | |
|---|---|---|---|---|---|
| HEMA =Hydroxyethylmethacrylat 2-EHA = 2-Ethylhexylacrylat HPA = Hydroxypropylacrylat MA = Methylacrylat 4-HS = 4-Hydroxystyrol | | | | | |

Anschließend wurden die Polymere 1 - 3 in einer polymeranalogen Reaktion geschützt. Zur Reaktion eignen sich Di-tert.-butyldicarbonat mit katalytischen Mengen N,N-Dimethylaminopyridin oder die Umsetzung mit Chlorameisensäure-tert.-Butylester mit vorangegangener Deprotonierung durch Natriumhydrid.

### a) Polymer-analogue Umsetzung mit Di-tert-Butyldicarbonat

Die Polymere aus den Beispielen 1 - 3 (je 100 g) wurden in einem Aceton/Toluol-Gemisch (500 ml) gelöst und unter Rühren wurden 1,2 Äquivalente Di-tert.-Butyldicarbonat (bezogen auf die Anzahl der Hydroxygruppen), gelöst in 150 ml Toluol, hinzugegeben. Nach 24 h wurde die Reaktion abgebrochen und die Lösemittel im Vakuum entfernt.

### b) Polymer-analogue Umsetzung mit Chlorameisensäure-tert Butylester

Die Polymere aus den Beispielen 1 - 3 (je 200g) wurden im Vakuum getrocknet und anschließend in 500 ml Toluol gelöst. Unter Rühren und unter Argon-Atmosphäre wurde 1 Äquivalent NaH (bezogen auf die Anzahl der Hydroxygruppen) hinzugegeben. Nach 60 Minuten Reaktionszeit wurden 1,5 Äquivalente Chlorameisensäure-tert.-Butylester hinzugetropft und die Reaktion wurde für 24 h auf 80 °C erhitze Nach Abkühlen auf Raumtemperatur gab man wäßrige Ammoniumchlorid-Lösung hinzu, extrahierte die organische Phase mehrmals mit wäßriger Lösung und trocknete das Polymer bei 60°C für 24 h.

### c) Umsetzung der Monomere mit Di-tert-Butyldicarbonat

Die Monomere HEMA, HPA oder 4-HS wurden in THF gelöst und unter Rühren mit 1,2 Äquivalenten Di-tert.-Butyldicarbonat (bezogen auf die Anzahl der Hydroxygruppen) versetzt. Nach 24 h wurde die Reaktion abgebrochen und das Lösemittel im Vakuum entfernt. Die BOC-geschützten Produkte wurden destillativ aufgereinigt.

Durch die Umsetzung veränderte sich die Comonomerzusammensetzung nicht, nur die Hydroxygruppen wurden BOC geschützt. Die daraus resultierenden geschützten Verbindungen werden im folgenden mit 1-BOC (aus Beispiel 1 und BOC), 2-BOC (aus Beispiel 2 und BOC) sowie 3-BOC (aus Beispiel 3 und BOC) bezeichnet.

Alternativ lassen sich die Beispiele 1-BOC bis 3-BOC durch die Polymerisation der BOC-geschützten Monomere herstellen:

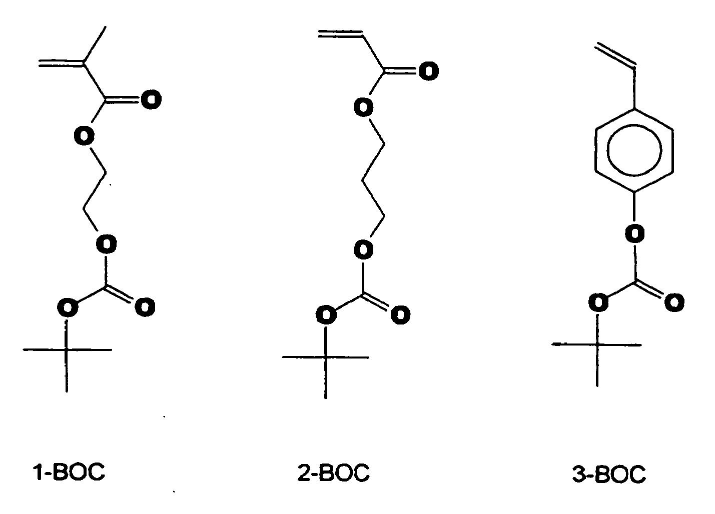

Zur Überprüfung der Eignung für die Hotmelt-Technologie wurden die Haftklebemassen durch DMA untersucht. Beispiele sind in Figur 1 (Fließviskosität bei 130 °C von 1-BOC) und Figur 2 (DMA-Messung von 1-BOC. Temperatursweep bei 10 rad/s) gegeben.

Aus dem Maximum in Figur 2 läßt sich der dynamische Glasübergangspunkt (T_{g}) entnehmen, dieser liegt für 1-BOC bei etwa -10 °C. Aus Figur 1 wurde die Fließvisksoität bei 130 °C ermittelt. Verarbeitungstemperaturen von über 100 °C sind für den Hotmelt-Prozeß übliche Temperaturen, daher benötigt man Haftklebemassen, die eine relativ niedrige Fließviskosität bei diesen Temperaturen besitzen. Die für 1-BOC gemessene Fließviskosität (Diagramm 1) liegt im Bereich von 1000 - 5000 Pa*s bei 1 rad/s, dieses Material läßt sich daher sehr gut im Extruder verarbeiten.

### Vernetzung der Proben

### Beispiel 1va

100 g der Klebemasse 1-BOC (50 %ige Lösung) wurden mit 2 g Triarylsulfoniumhexafluorophosphat (Cyracure UVI-6990 ® [UNION CARBIDE]; 50 %ige Lösung) und 1 g aromatisches Polyisocyanat (Desmodur L75 ® [BAYER AG]) gemischt. Nach der Homogenisierung (Entfernung des Lösungsmittels) wurde die Klebemasse auf Trennpapier (silikonisiertes Papier) ausgestrichen, 60 Sekunden mit UV-Licht bestrahlt und 10 Minuten bei 120 °C temperiert. Zur UV-Bestrahlung wurde der Xenon-Chlorid-Strahler (VIB 308 Bulb [FUSION]) eingesetzt. Anschließend wurde die Masse klebtechnisch ausgeprüft.

### Beispiel 2va

100 g der Klebemasse 2-BOC (50 % in Lösung) wurden mit 2 g Triarylsulfoniumhexafluorophosphat (Cyracure UVI-6990 ® [UNION CARBIDE]; 50 %ige Lösung) und 1 g aromatisches Polyisocyanat (Desmodur L75 ® [BAYER AG]) gemischt. Nach der Homogenisierung (Entfernung des Lösungsmittels) wurde die Klebemasse auf Trennpapier (silikonisiertes Papier) ausgestrichen, 60 Sekunden mit UV-Licht einer Wellenlänge von 308 nm bestrahlt und 10 Minuten bei 120 °C temperiert. Zur UV-Bestrahlung wurde der Xenon-Chlorid-Strahler (VIB 308 Bulb [FUSION]) eingesetzt. Anschließend wurde die Masse klebtechnisch ausgeprüft.

### Beispiel 3va

100 g der Klebemasse 3-BOC (50 % in Lösung) wurden mit 2 g Triarylsulfoniumhexafluorophosphat (Cyracure UVI-6990 ® [UNION CARBIDE]; 50 %ige Lösung) und 1 g aromatisches Polyisocyanat (Desmodur L75 ® [BAYER AG]) gemischt. Nach der Homogenisierung (Entfernung des Lösungsmittels) wurde die Klebemasse auf Trennpapier (silikonisiertes Papier) ausgestrichen, 60 Sekunden mit UV-Licht einer Wellenlänge von 308 nm bestrahlt und 10 Minuten bei 120 °C temperiert. Zur UV-Bestrahlung wurde der Xenon-Chlorid-Strahler (VIB 308 Bulb [FUSION]) eingesetzt. Anschließend wurde die Masse klebtechnisch ausgeprüft.

### Beispiel 1vb

100 g der Klebemasse 1-BOC (50 % in Lösung) wurden mit 2 g Triarylsulfoniumhexafluorophosphat (Cyracure UVI-6990 ® [UNION CARBIDE]; 50 %ige Lösung) und 1 g bisepoxidiertem Bisphenol A (Rütapox 164 ® [BAKELITE AG]) gemischt. Nach der Homogenisierung (Entfernung des Lösungsmittels) wurde die Klebemasse auf Trennpapier (silikonisiertes Papier) ausgestrichen, 60 Sekunden mit UV-Licht einer Wellenlänge von 308 nm bestrahlt und 10 Minuten bei 120 °C temperiert. Zur UV-Bestrahlung wurde der Xenon-Chlorid-Strahler (VIB 308 Bulb [FUSION]) eingesetzt. Anschließend wurde die Masse klebtechnisch ausgeprüft.

### Beispiel 2vb

100 g der Klebemasse 2-BOC (50 % in Lösung) wurden mit 2 g Triarylsulfoniumhexafluorophosphat (Cyracure UVI-6990 ® [UNION CARBIDE]; 50 %ige Lösung) und 1 g bisepoxidiertem Bisphenol A (Rütapox 164 ® [BAKELITE AG]) gemischt. Nach der Homogenisierung (Entfernung des Lösungsmittels) wurde die Klebemassen auf Trennpapier (silikonisiertes Papier) ausgestrichen, 60 Sekunden mit UV-Licht einer Wellenlänge von 308 nm bestrahlt und 10 Minuten bei 120 °C temperiert. Zur UV-Bestrahlung wurde der Xenon-Chlorid-Strahler (VIB 308 Bulb [FUSION]) eingesetzt. Anschließend wurde die Masse klebtechnisch ausgeprüft.

### Beispiel 3vb

100 g der Klebemasse 3-BOC (50 % in Lösung) wurden mit 2 g Triarylsulfoniumhexafluorophosphat (Cyracure UVI-6990 ® [UNION CARBIDE]; 50 %ige Lösung) und 1 g bisepoxidiertem Bisphenol A (Rütapox 164 ® [BAKELITE AG]) gemischt. Nach der Homogenisierung (Entfernung des Lösungsmittels) wurde die Klebemassen auf Trennpapier (silikonisiertes Papier) ausgestrichen, 60 Sekunden mit UV-Licht einer Wellenlänge von 308 nm bestrahlt und 10 Minuten bei 120 °C temperiert. Zur UV-Bestrahlung wurde der Xenon-Chlorid-Strahler (VIB 308 Bulb [FUSION]) eingesetzt. Anschließend wurde die Masse klebtechnisch ausgeprüft.

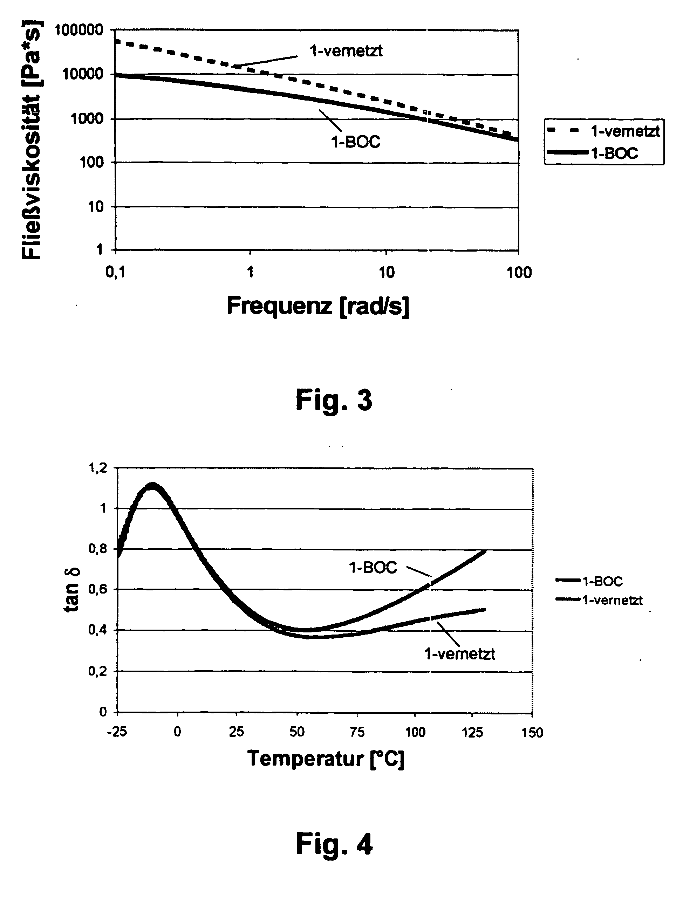

Durch die UV-initiierte thermische Vernetzung mit dem aromatischen Polyisocyanat (Desmodur L75 ® [BAYER AG]) ist die Fließviskosität deutlich angestiegen (Figur 3: Fließviskosität bei 130 °C. Vergleich von 1-BOC mit 1va). Dies ist ein eindeutiges Indiz für eine Kohäsionssteigerung und damit auch für eine erfolgte Vernetzung auf dem Träger. Des weiteren wurde über eine temperaturabhängige DMA-Messung wiederum die Glasübergangstemperatur von 1va gemessen und mit dem unvernetzten Ausgangsmaterial 1-BOC verglichen (Figur 4: Temperatursweep bei 10 rad/s. Vergleich von 1-BOC mit 1va).

Der Unterschied in der dynamischen Glasübergangstemperatur ist extrem gering. Dagegen verändert sich der mechanische Verlustfaktor tan δ bei höheren Temperaturen. Für das vernetzte Polyacrylat verläuft die Kurve bedeutend flacher, was wiederum eine effiziente Vernetzung anzeigt.

Um nun den Einfluß der Vernetzung auf die klebtechnischen Eigenschaften zu untersuchen, wurden die thermisch vernetzten Hotmelts im Vergleich zu den Ausgangspolymeren ausgetestet. Die Ergebnisse sind in Tabelle 2 aufgelistet:

| Tabelle 2 | | |
|---|---|---|
| Beispiel | SSZ 10 N, RT [min] | SSZ 5 N, 70 °C [min] |
| 1-BOC | 50 | 40 |
| 2-BOC | 75 | 40 |
| 3-BOC | 110 | 50 |
| 1va | 1940 | 1205 |
| 2va | 2150 | 1180 |
| 3va | 3475 | 2030 |

| | | |
|---|---|---|
| 1va, 2va, 3va vernetzt mit aromatischem Polyisocyanat Desmodur L75 ® [BAYER AG] SSZ: Scherstandzeiten | | |

Der Tabelle 2 kann man entnehmen, daß durch die Vernetzung die Kohäsion der Haftklebemassen deutlich verbessert wird. Vergleicht man die Beispiele 1-BOC und 1va miteinander, so stellt man fest, daß bei Raumtemperatur die Scherstandzeit von 50 auf 1940 Minuten und bei 70 °C von 40 auf 1205 Minuten ansteigt. Der gleiche Trend wird ebenfalls für die Beispiele 2 und 3 und entsprechend 2va und 3va gefunden.

Auch eine Vernetzung mit bi- und multifunktionellen Epoxiden wurde experimentell untersucht. Es wurden die Klebemassen 1-BOC, 2-BOC und 3-BOC - analog zu den Isocyanatvernetzern - mit 1 Gewichtsanteil Epoxid-Vemetzer und 2 Gewichtsanteilen Triarylsulfoniumhexafluorophosphat (Cyracure UVI-6990 ® [UNION CARBIDE]) in Lösung vermischt, das Lösemittel evaporiert und die Klebemassen als Hotmelt auf einem mit Haftvermittler beschichteten Träger aufgebracht. Anschließend wurde unter denselben Bedingungen wie bei der Isocyanatvernetzung mit UV-Licht bestrahlt, dann jedoch über eine Dauer von 20 Minuten temperiert.

Wiederum steigt - wie die Ergebnisse in Tabelle 3 zeigen - durch die thermische Vernetzungsreaktion die Kohäsion der Masse und damit auch die Scherfestigkeit an.

| Tabelle 3 | | |
|---|---|---|
| Beispiel | SSZ 10 N, RT [min] | SSZ 5 N, 70°C [min] |
| 1-BOC | 50 | 40 |
| 2-BOC | 75 | 40 |
| 3-BOC | 110 | 50 |
| 1vb | 1560 | 950 |
| 2vb | 2340 | 1380 |
| 3vb | 3125 | 2120 |

| | | |
|---|---|---|
| 1vb, 2vb, 3vb vernetzt mit bis-epoxidiertem Bisphenol A (Rütapox 164 ® [BAKELITE AG]) SSZ: Scherstandzeiten | | |

Für die vernetzten Beispiele 1vb, 2vb und 3vb wurde ebenfalls eine erhöhte Kohäsion, bezogen auf das Ausgangspolymer, gemessen. Die Scherstandzeiten erhöhten sich deutlich. Beispielsweise stieg in Beispiel 2vb bei Raumtemperatur die Scherstandzeit von 75 auf 2340 Minuten und bei 70 °C von 40 auf 1380 Minuten. Dennoch divergieren die mit unterschiedlichen Vemetzem hergestellten Muster in der Scherfestigkeit. So hielt z.B. Beispiel 1-BOC, sofern es mit dem aromatischen Polyisocyanat thermisch vernetzt wurde (1va), 1940 Minuten, das mit dem Diepoxid vernetzte Produkt (1vb) nur 1560 Minuten. Dies kann durch das unterschiedliche Molekulargewicht der Vernetzer und damit auch der unterschiedlichen Netzbogenlänge der Vernetzung erklärt werden.

Allgemein trat bei allen UV-initiierten thermischen Vernetzungen der Hotmelts keine Schädigung des Trägers auf. Die hergestellten Haftklebebänder lassen sich so z.B. als "transfer tapes" sehr gut zur doppelseitigen Verklebung einsetzen. Die Träger oder Trennpapiere wer den nicht durch ionisierende Strahlung verändert oder zerstört.

## Patentansprüche

1. Polymermischung aus den folgenden Komponenten:
a) einem Polyacrylatcopolymer aus den folgenden Monomeren
a1) Acrylsäureester und/oder Methacrylsäureester der folgenden Formel
CH₂ = C(R¹)(COOR²),
wobei R¹ = H oder CH₃ und R² eine Alkylkette mit 1 - 20 C-Atomen ist,
zu 65 - 99 Gew.-%, bezogen auf a),
a2) olefinisch ungesättigte Monomere mit funktionellen Gruppen,
zu 0 - 15 Gew.-%, bezogen auf a),
a3) Acrylate und/oder Methacrylate, deren Alkoholkomponente tert-Butoxycarbonyl- (BOC-) Gruppen enthält,
zu 1 - 20 Gew.-%, bezogen auf a),
zu 80 - 99,8 Gew.-%,
b) einem die Polymerisation regelnden Photoinitiator
zu 0,1 - 15 Gew.-%,
c) bifunktionellem Isocyanat und/oder bifunktionellem Epoxid
zu 0,1 - 5 Gew.-%.

2. Polymermischung nach Anspruch 1, **dadurch gekennzeichnet, daß**
die Komponente b) zu 0,5 - 1,5 Gew.-% und/oder die Komponente c) zu 0,5 - 1 Gew.-% eingesetzt werden.

3. Verfahren zur Herstellung von vernetzten Polyacrylaten, **dadurch gekennzeichnet, daß**
Polyacrylate aus den folgenden Monomeren
a1) Acrylsäureester und/oder Methacrylsäureester der folgenden Formel
CH₂ = C(R¹)(COOR²),
wobei R¹ = H oder CH₃ und R² eine Alkylkette mit 1 - 20 C-Atomen ist,
zu 65 - 99 Gew.-%,
a2) olefinisch ungesättigte Monomere mit funktionellen Gruppen,
zu 0 - 15 Gew.-%,
a3) Acrylate und/oder Methacrylate, deren Alkoholkomponente Hydroxy-Gruppen enthält,
zu 1 - 20 Ges.-%,
zunächst durch Einführung von tert.-Butoxycarbonylgruppen geschützt werden und die Vernetzung erst nach der Entschützung durch thermische Behandlung der nunmehr entschützten Polyacrylate stattfindet.

4. Verfahren zur Herstellung von vernetzten Polyacrylaten, **dadurch gekennzeichnet, daß**
Polyacrylate aus den folgenden Monomeren
a1) Acrylsäureester und/oder Methacrylsäureester der folgenden Formel
CH₂ = C(R¹)(COOR²),
wobei R¹ = H oder CH₃ und R² eine Alkylkette mit 1 - 20 C-Atomen ist,
zu 65 - 99 Ges.-%,
a2) olefinisch ungesättigte Monomere mit funktionellen Gruppen,
zu 0 - 15 Gew.-%,
a3) Acrylate und/oder Methacrylate, deren Alkoholkomponente Hydroxy-Gruppen
enthält,
zu 1 - 20 Gew.%,
zunächst durch Einführung von tert.-Butoxycarbonylgruppen geschützt werden und die Vernetzung erst nach der Entschützung durch Zusatz von Vernetzersubstanzen und thermische Behandlung der nunmehr entschützten Polyacrylate stattfindet.

5. Verfahren zur Herstellung von vernetzten Polyacrylaten, **dadurch gekennzeichnet, daß**
Polyacrylate aus den folgenden Monomeren,
a1) Acrylsäureester und/oder Methacrylsäureester der folgenden Formel
CH₂ = C(R¹)(COOR²),
wobei R¹ = H oder CH₃ und R² eine Alkylkette mit 1 - 20 C-Atomen ist,
zu 65 - 99 Gew.-%,
a2) olefinisch ungesättigte Monomere mit funktionellen Gruppen,
zu 0-15 Gew.-%,
a3) Acrylate und/oder Methacrylate, deren Alkoholkomponente Hydroxy-Gruppen
enthält,
zu 1 - 20 Gew.-%,
zunächst durch Einführung von tert-Butoxycarbonylgruppen geschützt werden und die Vernetzung erst nach der Entschützung durch Zusatz von bi- oder multifunktonellen Isocyanaten und thermische Behandlung der nunmehr entschützten Polyacrylate stattfindet.

6. Verfahren zur Herstellung von vernetzten Polyacrylaten, **dadurch gekennzeichnet, daß**
Polyacrylate aus den folgenden Monomeren
a1) Acrylsäureester und/oder Methacrylsäureester der folgenden Formel
CH₂ = C(R¹)(COOR²),
wobei R¹ = H oder CH₃ und R² eine Alkylkette mit 1 - 20 C-Atomen ist,
zu 65 - 99 Gew.-%,
a2) olefinisch ungesättigte Monomere mit funktionellen Gruppen,
zu 0 - 15 Gew.-%,
a3) Acrylate und/oder Methacrylate, deren Alkoholkomponente Hydroxy-Gruppen
enthält,
zu 1 - 20 Ges.-%,
zunächst durch Einführung von tert-Butoxycarbonylgruppen geschützt werden und die Vernetzung erst nach der Entschützung durch Zusatz von bi- oder multifunktionellen Epoxiden und thermische Behandlung der nunmehr entschützten Polyacrylate stattfindet.

7. Verfahren nach einem der Ansprüche 3 bis 6, **dadurch gekennzeichnet, daß**
die Schutzgruppen durch Bestrahlung mit UV-Licht abgespalten werden.

8. Verfahren nach einem der Ansprüche 3 bis 7, **dadurch gekennzeichnet, daß**
die Polymermischung zur Abspaltung der Schutzgruppen derart durch eine Maske mit ultraviolettem Licht bestrahlt wird, daß nur bestimmte Bereiche der Polymermischung der UV-Strahlung ausgesetzt sind.

9. Polyacrylat, erhältlich nach Anspruch 8.

10. Verwendung einer Polymermischung nach einem der Ansprüche 1 oder 2 oder eines nach Anspruch 8 hergestellten Polyacrylats als Haftklebemasse.

11. Verwendung nach Anspruch 10 als Haftklebemasse für ein Klebeband, wobei die Acrylathaftklebemasse als ein- oder doppelseitiger Film auf einem Träger vorliegt.

## Claims

1. Polymer mixture comprising the following components:
a) a polyacrylate copolymer of the following monomers
a1) acrylates and/or methacrylates of the following formula
CH₂ = C(R¹)(COOR²),
where R¹ = H or CH₃ and R² is an alkyl chain with 1-20 carbon atoms,
at 65-99% by weight, based on a),
a2) olefinically unsaturated monomers containing functional groups,
at 0-15% by weight, based on a),
a3) acrylates and/or methacrylates whose alcohol component contains tert-butoxycarbonyl (BOC) and/or hydroxyl groups,
at 1-20% by weight, based on a),
at 80-99.8% by weight,
b) a polymerization regulating photoinitiator
at 0.1-15% by weight,
c) difunctional isocyanate and/or bifunctional epoxide
at 0.1-5% by weight.

2. Polymer mixture according to claim 1, **characterized in that**
component b) is used at 0.5-1.5% by weight and/or component c) is used at 0.5-1 % by weight.

3. Process for preparing crosslinked polyacrylates, **characterized in that**
a) polyacrylates of the following monomers
a1) acrylates and/or methacrylates of the following formula
CH₂ = C(R¹)(COOR²),
where R¹= H or CH₃ and R² is an alkyl chain with 1-20 carbon atoms,
at 65-99% by weight,
a2) olefinically unsaturated monomers containing functional groups,
at 0-15% by weight,
a3) acrylates and/or methacrylates whose alcohol component contains hydroxyl groups,
at 1-20% by weight, are first protected by introduction of tert-butoxycarbonyl groups and the crosslinking takes place only after the deprotection, by thermal treatment of the now deprotected polyacrylates.

4. Process for preparing crosslinked polyacrylates, **characterized in that**
a) polyacrylates of the following monomers
a1) acrylates and/or methacrylates of the following formula
CH₂ = C(R¹)(COOR²),
where R¹ = H or CH₃ and R² is an alkyl chain with 1-20 carbon atoms,
at 65-99% by weight,
a2) olefinically unsaturated monomers containing functional groups,
at 0-15% by weight,
a3) acrylates and/or methacrylates whose alcohol component contains hydroxyl groups,
at 1-20% by weight, are first protected by introduction of tert-butoxycarbonyl groups and the crosslinking takes place only after the deprotection, by adding crosslinker substances and by thermal treatment of the now deprotected polyacrylates.

5. Process for preparing crosslinked polyacrylates, **characterized in that**
a) polyacrylates of the following monomers
a1) acrylates and/or methacrylates of the following formula
CH₂ = C(R¹)(COOR²),
where R¹ = H or CH₃ and R² is an alkyl chain with 1-20 carbon atoms,
at 65-99% by weight,
a2) olefinically unsaturated monomers containing functional groups,
at 0-15% by weight,
a3) acrylates and/or methacrylates whose alcohol component contains hydroxyl groups,
at 1-20% by weight, are first protected by introduction of tert-butoxycarbonyl groups and the crosslinking takes place only after the deprotection, by adding difunctional or polyfunctional isocyanates and by thermal treatment of the now deprotected polyacrylates.

6. Process for preparing crosslinked polyacrylates, **characterized in that**
a) polyacrylates of the following monomers
a1) acrylates and/or methacrylates of the following formula
CH₂ = C(R¹)(COOR²),
where R¹ = H or CH₃ and R² is an alkyl chain with 1-20 carbon atoms,
at 65-99% by weight,
a2) olefinically unsaturated monomers containing functional groups,
at 0-15% by weight,
a3) acrylates and/or methacrylates whose alcohol component contains hydroxyl groups,
at 1-20% by weight, are first protected by introduction of tert-butoxycarbonyl groups and the crosslinking takes place only after the deprotection, by adding difunctional or polyfunctional epoxides and by thermal treatment of the now deprotected polyacrylates.

7. Process according to any of claims 3 to 6, **characterized in that**
the protective groups are eliminated by irradiation with UV light.

8. Process according to any of claims 3 to 7, **characterized in that**
to eliminate the protective groups the polymer mixture is irradiated with ultraviolet light through a mask in such a way that only certain regions of the polymer mixture are exposed to the UV radiation.

9. Polyacrylate obtainable according to claim 8.

10. Use as a pressure-sensitive adhesive composition.

11. Use according to claim 10 of a polymer mixture according to either of claims 1 and 2 or of a polyacrylate prepared according to claim 8 as a pressure-sensitive adhesive composition for an adhesive tape, where the acrylic pressure-sensitive adhesive composition is present as a single- or double-sided film on a backing.

## Revendications

1. Mélange de polymères constitué par les composants suivants :
a) un copolymère de polyacrylate constitué par les monomères suivants
a1) des esters de l'acide acrylique et/ou de l'acide méthacrylique de la formule suivante
CH₂ = C(R¹)(COOR²),
où R¹ = H ou CH₃ et R² représente une chaîne alkyle comprenant 1 - 20 atomes de carbone,
à raison de 65 - 99% en poids, par rapport à a),
a2) des monomères oléfiniquement insaturés avec des groupements fonctionnels,
à raison de 0 - 15% en poids, par rapport à a),
a3) des acrylates et/ou des méthacrylates, dont le composant alcool contient des groupements tert-butoxycarbonyle (BOC),
à raison de 1 - 20% en poids, par rapport à a),
à raison de 80 - 99,8% en poids,
b) un photo-initiateur régulant la polymérisation
à raison de 0,1 - 15% en poids,
c) un isocyanate difonctionnel et/ou un époxyde difonctionnel
à raison de 0,1 - 5% en poids.

2. Mélange de polymères selon la revendication 1, **caractérisé en ce que** le composant b) est utilisé à raison de 0,5 - 1,5% en poids et/ou le composant c) à raison de 0,5 - 1% en poids.

3. Procédé pour la préparation de polyacrylates réticulés, **caractérisé en ce que** les polyacrylates, constitués par les monomères suivants
a1) des esters de l'acide acrylique et/ou de l'acide méthacrylique de la formule suivante
CH₂ = C(R¹)(COOR²),
où R¹ = H ou CH₃ et R² représente une chaîne alkyle comprenant 1 - 20 atomes de carbone,
à raison de 65 - 99% en poids,
a2) des monomères oléfiniquement insaturés avec des groupements fonctionnels,
à raison de 0 - 15% en poids,
a3) des acrylates et/ou des méthacrylates, dont le composant alcool contient des groupements hydroxy,
à raison de 1 - 20% en poids,
sont d'abord protégés par introduction de groupements tert-butoxycarbonyle et la réticulation n'a lieu qu'après la déprotection par traitement thermique des polyacrylates à présent déprotégés.

4. Procédé pour la préparation de polyacrylates réticulés, **caractérisé en ce que** les polyacrylates, constitués par les monomères suivants
a1) des esters de l'acide acrylique et/ou de l'acide méthacrylique de la formule suivante
CH₂ = C(R¹)(COOR²),
où R¹ = H ou CH₃ et R₂ représente une chaîne alkyle comprenant 1 - 20 atomes de carbone,
à raison de 65 - 99% en poids,
a2) des monomères oléfiniquement insaturés avec des groupements fonctionnels,
à raison de 0 - 15% en poids,
a3) des acrylates et/ou des méthacrylates, dont le composant alcool contient des groupements hydroxy,
à raison de 1 - 20% en poids,
sont d'abord protégés par introduction de groupements tert-butoxycarbonyle et la réticulation n'a lieu qu'après la déprotection par addition de substances de réticulation et traitement thermique des polyacrylates à présent déprotégés.

5. Procédé pour la préparation de polyacrylates réticulés, **caractérisé en ce que** les polyacrylates constitués par les monomères suivants
a1) des esters de l'acide acrylique et/ou de l'acide méthacrylique de la formule suivante
CH₂=C(R¹)(COOR²),
où R¹ = H ou CH₃ et R² représente une chaîne alkyle comprenant 1 - 20 atomes de carbone,
à raison de 65 - 99% en poids,
a2) des monomères oléfiniquement insaturés avec des groupements fonctionnels,
à raison de 0 - 15% en poids,
a3) des acrylates et/ou des méthacrylates, dont le composant alcool contient des groupements hydroxy,
à raison de 1 - 20% en poids,
sont d'abord protégés par introduction de groupements tert-butoxycarbonyle et la réticulation n'a lieu qu'après la déprotection par addition d'isocyanates difonctionnels ou polyfonctionnels et traitement thermique des polyacrylates à présent déprotégés.

6. Procédé pour la préparation de polyacrylates réticulés, **caractérisé en ce que** les polyacrylates constitués par les monomères suivants
a1) des esters de l'acide acrylique et/ou de l'acide méthacrylique de la formule suivante
CH₂ = C(R¹)(COOR²),
où R¹ = H ou CH₃ et R² représente une chaîne alkyle comprenant 1 - 20 atomes de carbone,
à raison de 65 - 99% en poids,
a2) des monomères oléfiniquement insaturés avec des groupements fonctionnels,
à raison de 0 - 15% en poids,
a3) des acrylates et/ou des méthacrylates, dont le composant alcool contient des groupements hydroxy,
à raison de 1 - 20% en poids,
sont d'abord protégés par introduction de groupements tert-butoxycarbonyle et la réticulation n'a lieu qu'après la déprotection par addition d'époxydes difonctionnels ou polyfonctionnels et traitement thermique des polyacrylates à présent déprotégés.

7. Procédé selon l'une quelconque des revendications 3 à 6, **caractérisé en ce que** les groupements de protection sont dissociés par irradiation par de la lumière UV.

8. Procédé selon l'une quelconque des revendications 3 à 7, **caractérisé en ce que** le mélange de polymères, pour la dissociation des groupements de protection, est irradié via un cache par de la lumière ultraviolette de telle manière que seules certaines zones du mélange de polymères sont exposées au rayonnement UV.

9. Polyacrylate, pouvant être obtenu selon la revendication 8.

10. Utilisation d'un mélange de polymères selon l'une quelconque des revendications 1 ou 2 ou d'un polyacrylate préparé selon la revendication 8 comme masse auto-adhésive.

11. Utilisation selon la revendication 10 comme masse auto-adhésive pour une bande adhésive, la masse auto-adhésive à base d'acrylate se trouvant sous forme d'un film monoface ou double face sur un support.
